# EUROPÄISCHE PATENTSCHRIFT

(11) **EP 0 835 681 B1**
(45) Veröffentlichungstag und Bekanntmachung des Hinweises auf die Patenterteilung: **19.03.2003**
(21) Anmeldenummer: 97116883.6
(22) Anmeldetag: 29.09.1997
(51) Int. Cl.: B01D 21/00, C10M 175/04, C10M 175/00

(54) **Verfahren und Vorrichtung zur Reinigung und Aufbereitung von in der Hüttenindustrie benutzten Kühl- und/oder Schmiermitteln**
Process and apparatus for purifying and treating coolants and/or lubricants used in the metallurgical industry
Procédé et appareil de purification et de traitement de réfrigérants et/ou de lubrifiants utilisés dans l'industrie métallurgique

(30) Priorität: 09.10.1996 DE 19641465
(43) Veröffentlichungstag der Anmeldung: 15.04.1998
(73) Patentinhaber: SMS Demag AG, 40237 Düsseldorf (DE)
(72) Erfinder: Schimion, Werner, Dipl.-Ing., 57271 Hilchenbach (DE)
(74) Vertreter: Valentin, Ekkehard, Dipl.-Ing.

(56) Entgegenhaltungen:
- BE-A- 837 672
- DE-A- 2 715 658
- DE-A- 2 743 055
- DE-A- 3 035 003
- DE-B- 1 141 039
- FR-A- 2 210 574
- GB-A- 2 109 709
- HEDVALL ET AL.: "ABWÄSSERREINIGUNGSANLAGE MAGNADISC FÜR DIE EISENHÜTTENINDUSTRIE" ASEA-ZEITSCHRIFT, Bd. 23, Nr. 1, 1978, DK, Seiten 15-21, XP002071850

## Beschreibung

Die Erfindung betrifft ein Verfahren und eine Vorrichtung zur Reinigung und Aufbereitung von mit metallischen und anderen stofflichen Verunreinigungen durchsetzten, zur Kühlung und/oder Schmierung verwendeten Flüssigkeiten, insbesondere zur Abscheidung von Zunder aus dem Betriebswasser von Kühlkreisläufen in der Hüttenindustrie.

In der Hüttenindustrie fallen große Mengen an Kühlwasser und Schmiermitteln an, insbesondere an Stranggießanlagen und Warmwalzanlagen. Neben Zunder kommen Metallspäne, Brennschneidund Flämmabbrand hinzu. Auf großen Blockstraßen in Warmwalzwerken fällt der Zunder in Form von Fladen und sogenannten Fischen an, auf Rollgängen und Kühlbetten sind es kleine Platten und Plättchen bis hinab zu Korngrößen von wenigen tausendstel Millimetern. Das im Walzprozeß zugeführte Kühlwasser wird vorteilhafterweise gleichzeitig als Transportmittel für den anfallenden Walzenzunder und andere Feststoffe sowie zum Wegschwemmen der eingesetzten Schmiermittel, etwa Öl oder Fett, benutzt. Das Betriebswasser wird gesammelt und einem Aufbereitungskreislauf zugeführt. Problematisch für die Aufbereitung und Reinigung des Betriebswassers erweist sich hier insbesondere die Vermischung des Betriebswassers mit Zunderteilchen zusammen mit Ölen und Fetten, was für den Reinigungs- und Rückgewinnungsprozeß umfangreiche Einrichtungen erforderlich macht.

Bei einer konventionellen Anlage setzt die Reinigung und Aufbereitung die Aufeinanderfolge von einzelnen Verfahrensschritten in gesonderten Anlagen voraus, die mit einer Grobreinigung in einem Sedimentationsbecken beginnt. In diesem Tiefbecken, dem sogenannten Sinterbrunnen, in dem das von beispielsweise einer Walzstraße zurücklaufende Kühlwasser gesammelt wird, scheiden sich durch Sedimentation die größeren und somit schwereren Zunderteile ab, die relativ ölarm sind. Das somit vorgereinigte Kühlwasser wird anschließend in ein Vorklärbecken gepumpt, in dem ein weiterer Schwerkraftausfall von Feststoffen erzielt wird. Für eine anschließende Feinreinigung wird das Wasser über Kies- oder Sandfilter gepumpt und gelangt dann über Rückkühlbauwerke in ein Sammelbecken und von dort über Prozeßpumpen zum Walzwerk zurück.

Von großem Nachteil erweisen sich hier der große Platzbedarf der Anlage, die hohen Investitionskosten und der große Energieaufwand für die Zwischenpumpen.

Ferner hat es sich als nachteilig herausgestellt, daß sich die im Walzwerk anfallende Leckölmenge mit dem Feinzunder, der teilweise im Vorklärbecken und teilweise in den Filtern abgeschieden wird, durch die Pumparbeit verbindet und somit den Zunder für die Wiederverhüttung unbrauchbar macht. Lediglich der grobe Zunder, der schon im Tiefbrunnen ausfällt, ist im wesentlichen noch frei von Ölbestandteilen und damit zur Verhüttung geeignet.

Für die Feinreinigung sind anstelle von Kies- oder Sandfiltern auch Zentrifugalabscheider bekannt. Hierbei tritt die Flüssigkeit mit den darin enthaltenen Schwebstoffen tangential in einen Separator ein und wird in kreisförmige Bewegung gebracht. Die Zentrifugalkraft drückt jene Feststoffe, die schwerer als die Flüssigkeit sind, an die Wandung der Trennkammer, worauf diese langsam nach unten in eine Sammelkammer gleiten. Als problematisch erweist sich aber, daß ein hoher Energieaufwand für die Pumparbeit notwendig ist. Weiterhin setzen die Partikelgrößen diesem Verfahren Grenzen; denn je kleiner die abzuscheidenden Partikel sind, um so größer muß die Zentrifugalkraft sein, was mit einer erhöhten Pumpleistung und damit verbundenem Energieaufwand einhergeht. Diese Reinigungsmethode erreicht zudem nicht die Reinheitswerte, wie sie durch Kies- oder Sandfilter geschaffen werden.

Aus der DE 41 15 819 A1 ist bekannt, eine Feinreinigung mittels eines in einer nachgeschalteten Pumpenvorlage installierten Magnetscheiders durchzuführen. Es wird ausgeführt, daß in einer möglichst strömungsberuhigten Zone des Pumpenvorlagebeckens mit Hilfe des Magnetscheiders mittlere und feine Zunderteilchen von dem Betriebswasser abgeschieden und oberhalb des Wasserniveaus von dem Magnetscheider abgestreift werden. Die so erhaltenen Zunderteilchen werden anschließend dem Verhüttungsprozeß wieder zugeführt. Über die Art des Magnetabscheiders finden sich weiter keine Hinweise.

Eine Magnetfilteranlage zur Abwässerreinigung ist aus der ASEA-Zeitschrift, 1978, Jahrgang 23, Heft 1, S. 15 bis 21, bekannt. Es wird eine Reinigungsanlage vorgeschlagen, die Magnetscheiben verwendet, welche parallel zueinander angeordnet sind und in einem Becken, in dem sich das zu reinigende Wasser befindet, rotieren. Die Schwebekörper haften allein durch Magnetkraft an den Scheiben; sie werden durch endlose, profilierte Gummiriemen von den Scheibenflächen abgestreift und aus dem Filter herausgetragen. Die endlosen Gummiriemen zum Abstreifen und Entfernen des Schlamms unterliegen hierbei allerdings einem hohem Verschleiß und müssen regelmäßig ausgewechselt werden.

Neben den bisher beschriebenen Techniken ist weiterhin die Parallelplatten-Technik mit schräggestellten Lamellen zur Reinigung von Flüssigkeiten bekannt. Hierbei werden durch Schwerkraftsedimentation suspendierte Stoffe aus der Flüssigkeit separiert, indem die Feststoffanteile während einer erzeugten Aufwärtsströmung auf den Platten sedimentieren und nach unten im Gegenstrom zu dem aufsteigenden Klarwasser in einen vorgesehenen Schlammtrichter rutschen. Der hier gesammelte Dünnschlamm wird mittels Pumpen entfernt und weiter eingedickt. Zur Gewährleistung eines Abrutschens der Feststoffanteile müssen die Platten eine Neigung aufweisen, die oftmals Werte von 70° gegenüber der Horizontalen beträgt. Mit Vergrößerung des Neigungswinkels nimmt allerdings die Abscheidungswirkung durch Sedimentation auf den einzelnen Platten ab. Ebenso wie die Abscheidung durch Zentrifugalkraft werden bei dieser Technik nicht die hohen Reinheitswerte erreicht, wie sie mit der Reinigung über Kies- und Sandfilter ermöglicht werden. Die Grenze der Abscheidefähigkeit wird durch die Dichte und die Größe der Feststoffpartikel bestimmt.

Aus der DE-B- 141 039 ist die Verwendung einer fest angeordneten dauermagnetischen Haftleiste bekannt, bei welcher eine Reihe nebeneinander angeordneter Dauermagnete mit gleichen Polen an einer vorzugsweise nicht ferromagnetischen Schiene befestigt ist. Eine oder mehrere solcher Leisten werden dem Strom einer zu reinigen Flüssigkeit, beispielsweise in Verbindung mit an sich bekannten Trenn- und Überlaufwänden, entgegengestellt.

Der Erfindung liegt die Aufgabe zugrunde, eine Vorrichtung sowie ein Verfahren zur Reinigung und Aufbereitung von zur Kühlung und/oder Schmierung eingesetzten Flüssigkeiten zu schaffen, mit der bzw. dem ein der Reinigung mittels Kies- oder Sandfilter entsprechender hoher Reinigungsgrad bei geringem Ölanteil der entfernten Festkörperteilchen erzielt wird, bei gleichzeitiger Reduzierung der damit bisher verbundenen umfangreichen und teuren Anlagen.

Diese Aufgabe wird durch die Merkmale der Ansprüche 1 und 4 gelöst. Vorteilhafte Ausgestaltungen der Erfindung sind in den Unteransprüchen offenbart.

Kern der Erfindung ist es, die belasteten Wässer und/oder anderen Flüssigkeiten nach der Grobreinigung in nur einem weiteren Schritt abschließend zu reinigen und einen hohen Reinigungsgrad dadurch zu erreichen, daß neben der Abscheidewirkung durch Sedimentation auf den sich durch das Flüssigkeitsbad quer zur Strömungsrichtung im wesentlichen ohne Winkeländerung bewegenden, horizontal und parallel übereinander angeordneten Platten gleichzeitig eine Reinigung und Abscheidung der magnetisierbaren, metallischen Partikel durch die magnetische Wirkung jeweils des oberen Plattenbereichs stattfindet.

Aufgrund der magnetischen, vorzugsweise permanentmagnetischen Eigenschaft der jeweiligen Plattenoberflächen wird die Wirkung der Schwerkraft auf die Zunderpartikel, sich auf den sich bewegenden Platten abzusetzen, vervielfacht. Im Gegensatz dazu ist die jeweils untere Plattenseite unmagnetisch, so daß eine entgegengesetzt wirkende Anziehungskraft auf die metallischen Zunderteilchen nicht auftritt und somit die Abscheidung auf den Plattenoberseiten nicht stört. Mit diesem Verfahren und dieser Konstruktion ist gewährleistet, daß zum einen Partikel von den Plattenoberseiten aufgrund magnetischer Kräfte angezogenen und somit der Flüssigkeit entzogen werden, zum anderen werden die einmal angesammelten Partikel sicher festgehalten und können von der strömenden Flüssigkeit nicht mehr weggeschwemmt werden. Hierbei wird unter der Oberseite jeweils die Seite der Platte verstanden, die in Richtung des Badspiegels zeigt.

Von Vorteil gegenüber konventionellen Anlagen ist insbesondere, daß aufgrund des durch die Magnetkraft erzeugten Verdichtungseffektes anhaftendes Öl von den Zunderteilchen freigegeben wird und sich auf diese Weise eine ölarme Zunderschicht auf den einzelnen Platten absetzt. Da die abgetrennten Zunderteilchen mit nur geringen Ölanteilen abgeschieden werden, ist eine Zuführung in den Verhüttungsprozeß und eine Wiederverwertung zu einem hohem Prozentsatz gewährleistet. Auf diese Weise können insbesondere Kosten für die Deponierung von ölhaltigem Restschlamm, der nicht mehr für die Verhüttung geeignet ist, eingespart werden, was aus Umweltgründen besonders wünschenswert ist.

Die einzelnen Platten werden als Plattenstapel mittels eines Endlosfördermittels durch die Flüssigkeit bewegt, wobei sie mit dem Fördermittel, beispielsweise einer Transportkette, über Eingriffsmittel, wie Laschen oder Winkel, auf jeder Plattenseite verbunden sind. Durch die Beabstandung der einzelnen Platten ist gewährleistet, daß die Zwischenräume zwischen den Platten von den zu reinigenden Wässern gleichmäßig durchströmt werden.

Vorzugsweise sind zwei Plattenstapel in Strömungsrichtung gesehen hintereinander angeordnet, wobei sich jeweils die Platten eines Plattenstapels nach oben bzw. nach unten bewegen. Durch Hintereinanderschaltung oder Parallelschaltung von Plattenstapeln lassen sich - dem jeweiligen Anforderungsprofil entsprechend - im Grunde beliebig große Magnetflächen ausbilden.

Die Platten können kontinuierlich oder diskontinuierlich transportiert werden. Nach Austritt jeweils der obersten Platte des ersten Plattenstapels werden die sich dort angesammelten abgeschiedenen Partikel auf einfache Weise durch beispielsweise Absaugen oder mechanisches Abstreifen entfernt. Hierbei erweist es sich als vorteilhaft, daß bei Austritt der Platte aus dem Flüssigkeitsbad das Wasser von der Platte bereits abfließen kann und sich die somit vorgetrockneten Partikel leicht entfernen lassen. Der Absaugprozeß läßt sich sowohl mit einer sich über die jeweilige Plattenoberfläche bewegenden Absaugdüse als auch mit einer stationären Düse unter Ausnutzung einer Bewegung der jeweils oberen Platte ausführen. Gleiches gilt für das mechanische Abstreifen; entweder bewegt sich ein Abstreifer über die stehende Plattenoberfäche oder die Plattenoberfläche bewegt sich unter dem stehenden Abstreifer.

Vorzugsweise wird die jeweils obere Platte des ersten Stapels nach ihrer Reinigung in den Kreislauf des zweiten Stapels durch Längsverschiebung der Platte in ein bereitstehendes Aufnahmefach verschoben, um die Abwärtsbewegung im zweiten Stapel mitzumachen und wiederum für die Reinigung der Flüssigkeit zur Verfügung zu stehen. Die Eingriffsmittel des Fördermittels sind so konstruiert, daß sie diese Längsbewegung der Platten gestatten. Analog wird dann die jeweils unterste Platte des zweiten Stapels in ein bereitstehendes Aufnahmefach des ersten Stapels in entgegengesetzte Richtung horizontal verschoben. Auf diese Weise sind sämtliche Platten an der Rohwasser-Reinigungsarbeit beteiligt, und nur die sich in der Reinigungsstellung oberhalb des Badspiegels befindende Platte ist für eine kurze Zeit vom Reinigungsprozeß ausgeschlossen.

Es ist auch möglich, daß der Magnetplatten-Parallelabscheider nur aus einem Plattenpaket bzw. -stapel besteht, und sich die einzelnen Platten patemosterartig auf einer Voll-Kreisbahn im Flüssigkeitsbad bewegen.

Die Platten können grundsätzlich jede beliebige Form aufweisen, die für einen Transport mit einem Endlosfördermittel geeignet ist.

Vorzugsweise wird die Plattenoberseite mit einer Magnetfolie versehen, die sich vollflächig auf einem magnetisierbarem Stahlblech, beispielsweise ferritischem Stahlblech, aufkleben läßt. Dies gewährleistet einen großen Wirkungsgrad der Magnetkraft und macht die Vorbereitung der Platten für einen Einsatz einfach.

Gemäß einer alternativen Ausgestaltung empfiehlt es sich, die Plattenoberseite aus einzeln angeordneten Permanent-Magneten sowie einer Abdeckplatte aus nichtmagnetischem bzw. nicht magnetisierbarem Werkstoff, vorzugsweise einem Edelstahl, zusammenzusetzen, wobei die Magnetkörper mit der Plattenunterseite, vorzugsweise einem ferritischen Stahlblech, durch Kleben verbunden sind. Mit einer solchen Anordnung wird bei dieser Ausführung gewährleistet, daß das Magnetfeld zwar die Plattenoberseite, d.h. in diesem Fall die Abdeckplatte, nicht jedoch die Plattenunterseite durchdringen kann, da das Magnetfeld nach unten hin abgeschirmt wird. Somit werden abscheidbare Partikel nur von der Plattenoberseite angezogen und festgehalten.

Es hat sich gezeigt, daß die geklebte Bauweise eine hohe Gesamtsteifigkeit gewährleistet, so daß große Abscheideflächen je Platte geschaffen werden können, ohne daß sich eine nennenswerte Durchbiegung selbst bei voller Ablagerungsbelastung ergibt.

Bei der Verwendung des erfindungsgemäßen Magnetplatten-Parallelabscheiders in dem Kühlwasserkreislauf für eine Walzstraße ist dem Parallelabscheider vorteilhafterweise ein Absetzbecken für die Grobreinigung des verunreinigten Betriebswassers sowie eine Überleitung des vorgeklärten Betriebswassers vorgeschaltet und eine Einrichtung zum Ableiten und Rückführen des nachgeklärten Betriebswassers nachgeschaltet. Durch die hohe Reinigungsleistung des erfindungsgemäßen Abscheiders kann auf konventionelle Feinreinigungen in Kies- und Sandfilteranlagen mit entsprechend aufwendigen Anlagen verzichtet werden.

Weitere Einzelheiten und Vorteile der Erfindung ergeben sich aus den Ansprüchen und der nachfolgenden Beschreibung, in der in den Zeichnungen dargestellte Ausführungsbeispiele näher erläutert sind. Es zeigen:
- Figur 1: einen Magnetplatten-Parallelabscheider für die Reinigung von belasteten Betriebswässern mit zwei in Strömungsrichtung hintereinander angeordneten Plattenstapeln, schematisch als Seitenansicht dargestellt ;
- Figur 2: den Abscheider nach Figur 1, schematisch als Vorderansicht dargestellt;
- Figur 3: die Lagerung und Gestaltung der einzelnen horizontal angeordneten Platten eines Abscheiders nach einer ersten Ausführungsform, schematisch als Vorderansicht dargestellt;
- Figur 4: die Lagerung und Gestaltung der einzelnen horizontal gelagerten Platten eines Parallelabscheiders nach einer zweiten Ausführungsform, schematisch als Vorderansicht dargestellt;
- Figuren 5a und 5b: Einzelheit der Figur 4 in Seitenansicht sowie eine Draufsicht auf eine dort eingesetzte Platte, in der Seitenansicht (Figur 5a) und in der Draufsicht (Figur 5b) gezeigt; und
- Figur 6: einen Magnetplatten-Parallelabscheider, der in einem geschlossenen Kühlwasser-Kreislauf eines Walzgerüstes integriert ist, schematisch dargestellt.

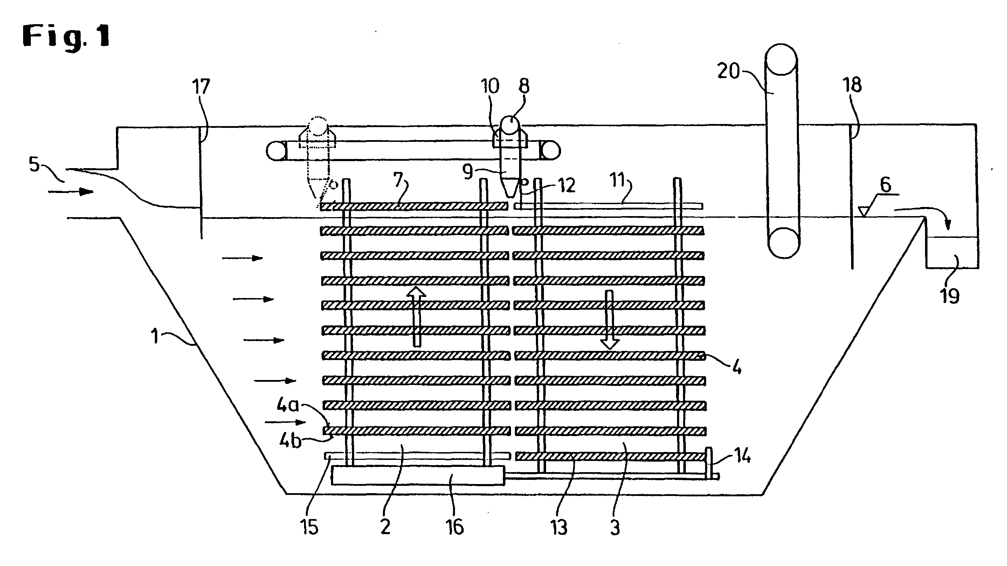

In Figur 1 ist ein Magnetplatten-Parallelabscheider dargestellt, der aus zwei in einem Behälter 1 hintereinander angeordneten Plattenstapeln 2, 3 besteht. Die beiden Plattenstapel 2, 3 setzen sich aus einzelnen, horizontal ausgerichteten, zueinander parallel beabstandeten Platten 4 zusammen. Während die Platten des ersten Plattenstapels 2 schrittweise nach oben befördert werden, werden die Platten des zweiten Plattenstapels 3 nach unten in Richtung des Bodens des Behälters 1 bewegt.

Im oberen Teil des Behälters 1 ist auf der einen Seite ein Rohwassereinlauf 5 vorgesehen, durch den das zu reinigende Betriebswasser in den Behälter 1 und durch die Zwischenräume der einzelnen Platten 4 quer zu deren Bewegungsrichtung strömt. Die Plattenoberseiten 4a der einzelnen Platten sind teilweise oder vollständig mit einem magnetischen Material versehen, während die Plattenunterseiten 4b nicht magnetisch sind.

Die Reinigung des Betriebswasser, das neben ungelösten Festkörperteilchen, insbesondere Zunderteilchen, auch Öle und Fette enthält, setzt sich sowohl aus einem Sedimentationsvorgang aufgrund der Schwerkraft als auch einer Anziehung von einzelnen Zunderteilchen auf die Plattenoberfläche aufgrund der Magnetkraft zusammen. Die auf der Plattenoberfläche bzw. - seite 4a abgelagerten und festgehaltenen Teilchen werden von den Platten quer zur Strömung in Richtung Badspiegel 6 transportiert. Aufgrund der magnetischen Wirkung der Plattenoberseite können sie nicht weggeschwemmt werden.

Die jeweils oberste Platte des ersten, sich aufwärtsbewegenden Stapels 2 tritt aus dem Flüssigkeitsbad heraus. Mit 7 ist eine solche Magnetplatte in der sich dann ergebenden Reinigungsstellung gekennzeichnet. In der Reinigungsstellung ist oberhalb des Plattenstapels 2 eine Vorrichtung 8 zum Absaugen der aus dem Wasser ausgetretenen und damit vorgetrockneten Feststoffpartikel, die sich auf der einzelnen Platte angesammelt haben, angeordnet. Diese Vorrichtung ist mit einer Saugschlitzdüse 9 versehen, die mittels eines Fahrantriebes 10 parallel und entlang zur Plattenoberfläche 4a bewegt wird und somit ein zügiges und sicheres Absaugen der Partikel gewährleistet.

Nach Beendigung des Absaugvorgangs wird die nunmehr gereinigte Platte 7 in Längsrichtung in ein dafür vorgesehenes leeres Aufnahmefach 11 des zweiten Plattenstapels 3 verschoben, das sich auf der gleichen Höhe wie die Platte 7 befindet. Mit 12 ist eine Klinke für den Plattenvorschub bzw. die Plattenverschiebung bezeichnet. Der zweite Plattenstapel 3 bewegt sich anschließend um den Abstand einer Platte nach unten, wobei die jetzt gereinigte Platte 7 wieder in den Flüssigkeitsstrom eintritt und ihrer Reinigungsaufgabe erneut nachkommt. Gleichzeitig liegt die unterste Platte 13 des zweiten Plattenstapels an einen Anschlag 14 für die Plattenverschiebung an und wird analog, allerdings in entgegengesetzter Längsrichtung, zurück in ein leeres Aufnahmefach 15 des ersten Plattenstapels 2 verschoben. Von hier aus bewegt sich die Platte 13 mit dem Plattenstapel 2 wieder schrittweise aufwärts. Das Verschieben der jeweils untersten Platte 13 übernimmt ein hydraulischer Zylinder 16, der an seiner Kolbenstange den Anschlag 14 aufweist.

Um die Absaugeinrichtung 8 und die jeweils aufgetauchte, oberste Platte 7 vor unnötigen Spritzern durch das einströmende Rohwasser zu schützen, ist im Eintrittsbereich des Behälters 1 eine Tauchwand 17 angeordnet. Eine zweite Tauchwand 18 befindet sich auslaufseitig kurz vor dem Ablauf 19 des nun gereinigten Wassers aus dem Behälter 1. Wie bereits erwähnt, ermöglichen es die Magnetplatten, das Öl von den ölbehafteten Zunderteilchen im wesentlichen vollständig abzutrennen. Nachdem die Flüssigkeit sowohl den sich aufwärts- als auch abwärts bewegenden Plattenstapel 2, 3 durchströmt hat, ist sie von ungelösten Festkörperpartikeln befreit. Das abgetrennte Öl wird kurz vor dem Ablauf 19 mittels eines ölabscheiders (Ölskimmer) 20 in Höhe des Flüssigkeitsniveaus abgezogen.

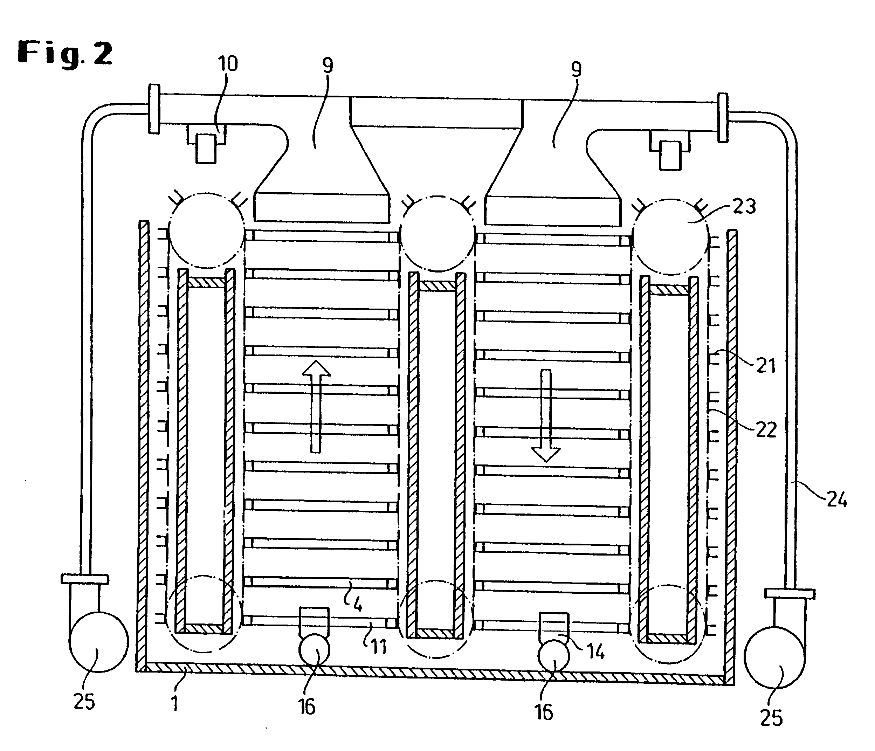

In Figur 2 wird die Fördertechnik der einzelnen Plattenstapel und die Absaugtechnik nochmals verdeutlicht. Die einzelnen Platten werden von geeigneten Aufnahmewinkeln 21, die von einer Endlos-Transportkette 22 um zwei Kettenräder 23 bewegt werden, auf jeweils beiden Seiten aufgenommen und transportiert. Bei dieser Ausführungsform läßt sich auf einfache Weise ein Verbreiten des Abscheider-Querschnitts durch Hinzufügen weiterer Plattenstapel erreichen, was ohne Probleme bei entsprechender Größe des Behälters möglich ist. Jedem Plattenstapel ist zur Reinigung der jeweils obersten, aus der Bodenflüssigkeit ausgetretenen Magnetplatte eine Absaugdüse 9 zugeordnet; über Sauganschlüsse 24, die mit Absaugventilatoren 25 verbunden sind, werden die aus der Strömung entfernten Partikel abgesaugt und in geeigneten Behältern zur Wiederverwendung im Hüttenprozeß transportiert. Diese Fördertechnik erlaubt es, durch die Anzahl der jeweiligen Platten den Magnetplatten-Parallelabscheider individuell an den Verschmutzungsgrad des jeweiligen Betriebswassers anzupassen. Es können problemlos bei einer geeigneten Anzahl an Aufnahmewinkeln Platten entfernt bzw. hinzugefügt werden.

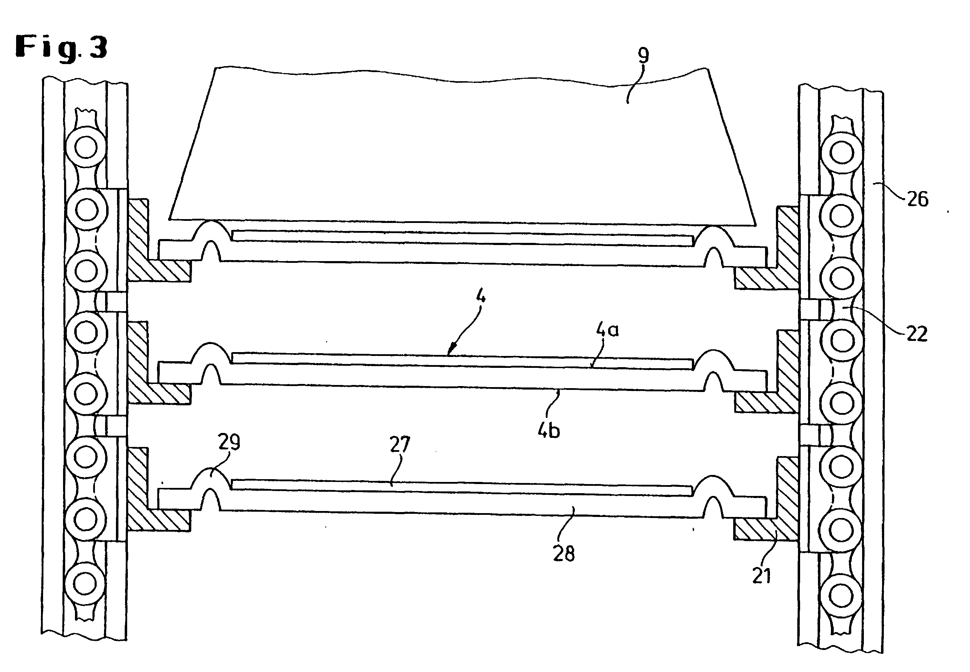

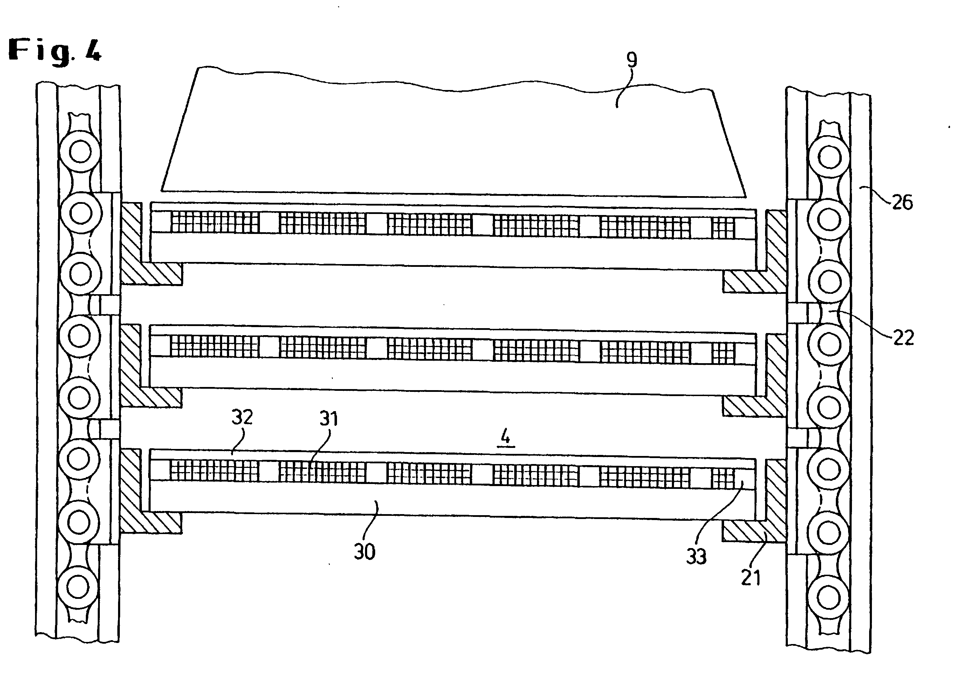

Das Aufliegen der einzelnen Platten auf den Aufnahmewinkeln 21 ist detailliert in den Figuren 3 und 4 dargestellt. Die Transportkette 22 bewegt sich in einer Kettenführung 26. Die Auf-5 nahmewinkel 21 sind über Laschen an der Transportkette 22 befestigt.

Die Platten 4 setzen sich beim Ausführungsbeispiel nach Figur 3 aus einer Magnetfolie 27 und einem Trägerblech 28 zusammen, ) das hier vorzugsweise aus ferritischem Stahl besteht. Die Magnetfolie 27 ist auf die Oberseite des Stahlblechs vollflächig aufgeklebt. Schematisch ist die Düse 9 der Absaugvorrichtung 8 dargestellt. Die oberste Platte befindet sich in der Reinigungsstellung. Die Oberfläche wird durch Absaugen mittels der Schlitzdüse gereinigt, die über die Plattenlänge hinweg bewegt wird. Die Platten 4 besitzen seitliche Randverstärkungen 29 in Form von Sicken, die gleichzeitig gewährleisten, daß jeweils die einzelnen Platten in einem vorbestimmten Abstand zu der Absaugdüse 9 gehalten werden. Damit wird sichergestellt, daß die Magnetfolienoberfläche nicht mit der Absaugdüse 9 in Kontakt kommt, was einen Verschleiß der Folie mit sich bringen würde.

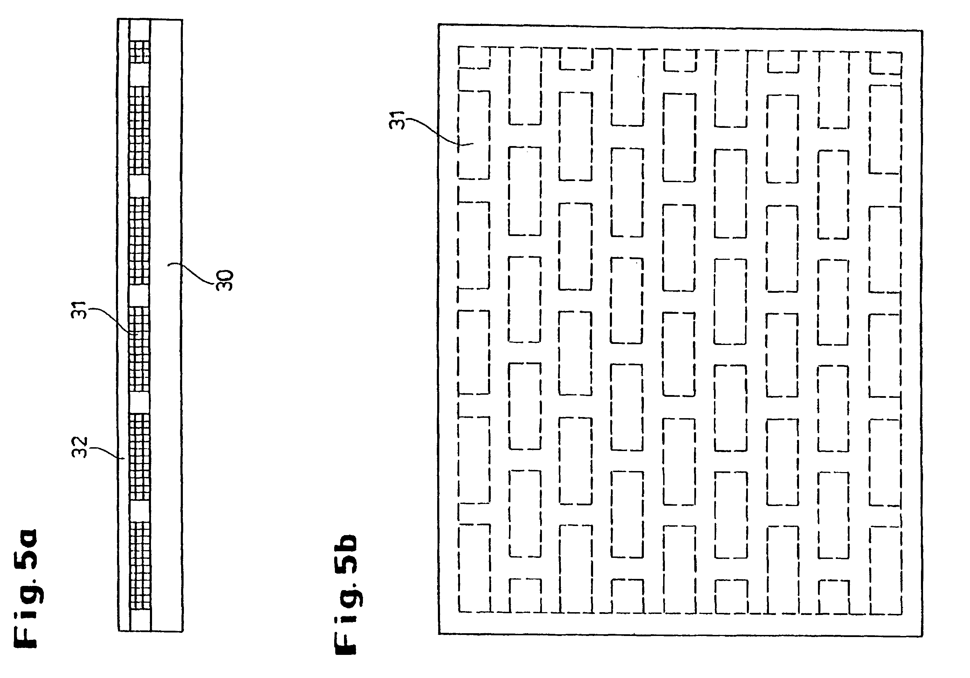

Eine weitere Ausführungsform der Magnetplatte zeigt Figur 4. Die jeweiligen Platten bestehen aus einer unteren Trägerplatte 30, auf die rechteckige Permanentmagnete 31 und darüber eine Abdeckplatte 32 aus einem nichtmagnetischen Material, vorzugsweise einem austenitischen Edelstahl, aufgesetzt sind und als Ganzes die Magnetplatte 7 bilden. Mit 33 wird eine rundumlaufende Randleiste bezeichnet. Die einzelnen Permanentmagnete 31 sind versetzt zueinander angeordnet (vgl. Figur 5b) und auf der Trägerplatte 30 aufgeklebt. Die Figur 5a zeigt im Querschnitt bzw. als Seitenansicht eine zuvor beschriebene Magnetplatte, die sich aus der Trägerplatte 30, Permanentmagneten 31 und der Deckplatte 32 zusammensetzt.

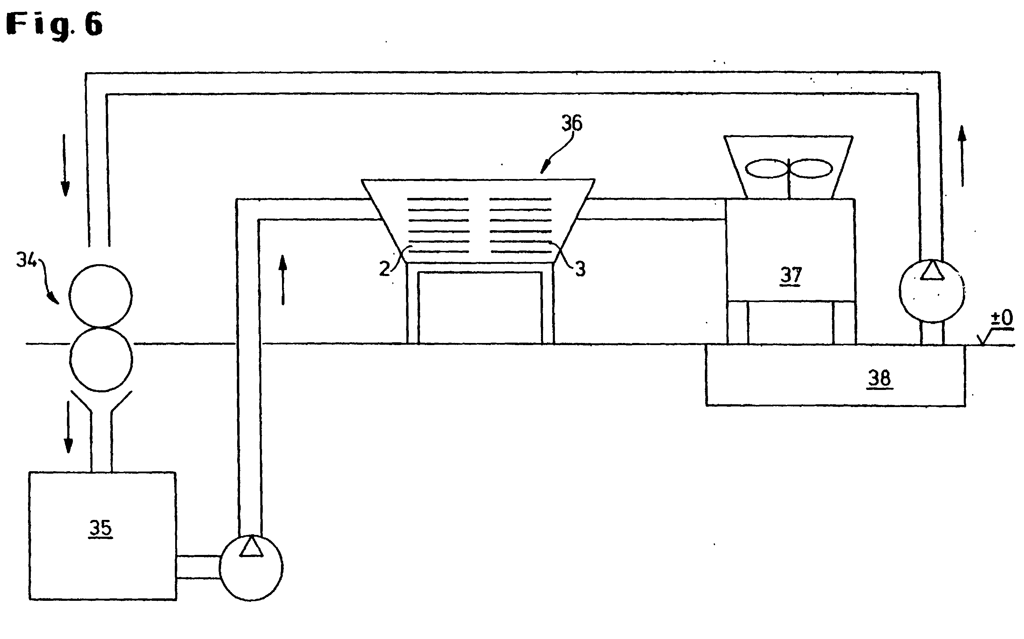

Die Figur 6 veranschaulicht schematisch den einfachen Aufbau eines kompletten geschlossenen Kühlwasser-Umlaufsystems mit integriertem Magnetplatten-Parallelabscheider am Beispiel einer - schematisch dargestellten - Walzstraße. Das für die Kühlung der symbolisch durch zwei Walzen gekennzeichneten Walzstraße 34 verwendete Kühlwasser wird gesammelt und einem Tiefbrunnen 35 für die Grobreinigung der größeren Zunderteile durch Sedimentation zugeführt. Der sich hier absetzende Grobsinter wird in konventioneller Weise durch einen Greiferkran entfernt. Das somit vorgereinigte Wasser wird in den hier wiederum zwei Plattenstapel 2, 3 aufweisenden Magnetplatten-Parallelabscheider 36 gepumpt, durchströmt diese ohne Druckverlust bei gleichzeitiger Feinreinigung unter Ausnutzung von Schwerkraft und Magnetkraft und fließt als Reinwasser weiter in das nachgeschaltete Rückkühlwerk 37. Im Kaltwasserbecken 38 unterhalb des Rückkühlwerkes 37 sammelt sich das gereinigte und gekühlte Wasser, um anschließend über Prozeßpumpen erneut der Walzstraße zur Verfügung zu stehen.

Diese Erfindung kann besonders vorteilhaft in Wasserwirtschaftsanlagen von beispielsweise CSP- oder Warmbandwalzwerken eingesetzt werden.

## Patentansprüche

1. Verfahren zur Reinigung und Aufbereitung von mit metallischen und anderen stofflichen Verunreinigungen durchsetzten, zur Kühlung undloder Schmierung verwendeten Flüssigkeiten, insbesondere zur Abscheidung von Zunder aus dem Betriebswasser von Kühlkreisläufen in der Hüttenindustrie, wobei die zu reinigende Flüssigkeit durch die Zwischenräume von in einem Behälter (1) horizontal angeordneten Platten (4) strömt, wobei Festkörperpartikel durch magnetische Anziehungskraft auf den Platten (4) abgeschieden werden,
**dadurch gekennzeichnet,**
**daß** sich die Platten (4) quer zur Strömungsrichtung nach oben und/oder nach unten bewegen und sich die Festkörperpartikel aus dem Betriebswasser durch Sedimentation und durch die magnetische Anziehungskraft, ausgehend von den Plattenoberseiten (4a), auf den Platten (4) abscheiden und daß die angesammelten Festkörperpartikel jeweils von der obersten Platte (7) nach deren Austritt aus dem Flüssigkeitsbad entfernt werden und anschließend die gereinigte Platte wieder in das Flüssigkeitsbad eintritt und nach unten bewegt wird.

2. Verfahren nach Anspruch 1,
**dadurch gekennzeichnet,**
**daß** die einzelnen Platten (4) mittels eines Endlosfördermittels (22) gemeinsam bewegt werden, mit dem sie über Eingriffsmittel (21) verbunden sind.

3. Verfahren nach Anspruch 1 oder 2,
**dadurch gekennzeichnet,**
**daß**, nachdem die angesammelten Teilchen jeweils von der obersten Platte (7) nach deren Austritt aus dem Flüssigkeitsbad entfernt worden sind, bei mindestens zwei in Strömungsrichtung gesehen hintereinander angeordneten Plattenstapeln (2,3) anschließend die gereinigte Platte (7) des ersten Plattenstapels (2) in Längsrichtung in freistehende Eingriffsmittel des Fördermittels des benachbarten zweiten Plattenstapels (3) verschoben wird, wobei die jeweils unterste Platte (13) des zweiten Plattenstapels entgegengesetzt verschoben wird.

4. Vorrichtung zur Reinigung und Aufbereitung von mit metallischen und anderen stofflichen Verunreinigungen durchsetzten, zur Kühlung und/oder Schmierung verwendeten Flüssigkeiten, insbesondere zur Abscheidung von Zunder aus dem Betriebswasser von Kühlkreisläufen in der Hüttenindustrie, mit Platten (4), die in einem Behälter (1) horizontal angeordnet sind, durch deren Zwischenräume die zu reinigende Flüssigkeit strömt, wobei Festkörperpartikel durch magnetische Anziehungskraft auf den Platten (4) abgeschieden werden, zur Durchführung des Verfahrens nach den Ansprüchen 1 bis 3,
**dadurch gekennzeichnet,**
**daß** sich die Platten (4) quer zur Strömungsrichtung nach oben und/oder unten bewegen und daß jeweils die Plattenoberseite (4a) teilweise oder vollständig magnetisch ist zur Abscheidung der Festkörperpartikel aus dem Flüssigkeitsbad auf den Platten (4) durch Sedimentation und durch die magnetische Anziehungskraft und
**daß** sie eine Absaugvorrichtung (8) oder einen mechanischen Abstreifer aufweist zum Entfernen der angesammelten Festkörperpartikel jeweils von der obersten Platte (7) nach deren Austritt aus dem Flüssigkeitsbad.

5. Vorrichtung nach Anspruch 4,
**dadurch gekennzeichnet,**
**dass** die Plattenunterseite (4b) nicht magnetisch ist.

6. Vorrichtung nach Anspruch 4 oder 5,
**dadurch gekennzeichnet,**
**daß** die Plattenoberseite (4a) permanentmagnetisch ist.

7. Vorrichtung nach den Ansprüchen 4, 5 oder 6,
**dadurch gekennzeichnet,**
**daß** die Plattenoberseite (4a) mit einer Magnetfolie (27) versehen ist.

8. Vorrichtung nach den Ansprüchen 4, 5 oder 6,
**dadurch gekennzeichnet,**
**daß** die Plattenoberseite (4a) aus einzelnen Magnetkörpem (31) mit einer über diesen angeordneten Abdeckplatte (32) aus nichtmagnetischem Material besteht.

9. Vorrichtung nach einem der Ansprüche 6 bis 8,
**dadurch gekennzeichnet,**
**daß** mindestens zwei Plattenstapel (2,3) in Strömungsrichtung gesehen hintereinander in dem Behälter (1) angeordnet sind.

10. Vorrichtung nach einem der Ansprüche 6 bis 9,
**dadurch gekennzeichnet,**
**daß** dem Perallelpletten-Megnetebscheider (2, 3) ein Absetzbecken (35) für die Zuführung von gebrauchtem und verunreinigtem Betriebswasser sowie Einrichtungen zur Entnahme groben Zunders zur Überleitung des vorgeklärten Betriebswasser vorgeschaltet ist und eine Einrichtung (37) zum Ableiten und Rückführen des nachgeklärten Betriebwassers nachgeschaltet ist.

## Claims

1. Method of cleaning and preparing liquids interspersed with impurities of metallic and other materials and used for cooling and/or lubrication, in particular for separation of scale from the operating water of cooling circuits in the metallurgical industry, wherein the liquid to be cleaned flows through the intermediate spaces of plates (4) horizontally arranged in a container (1), wherein solid particles are deposited on the plates (4) by magnetic attractive force, **characterised in that** the plates (4) move upwardly and/or downwardly transversely to the flow direction and the solid particles from the operating water precipitate on the plates (4) by sedimentation and by the magnetic attractive force, starting from the plate upper sides (4a), and that collected solid particles are in each instance removed from the uppermost plate (7) after exit thereof from the liquid bath and subsequently the cleaned plate re-enters the liquid bath and is moved downwardly.

2. Method according to claim 1, **characterised in that** the individual plates (4) are moved in common by means of an endless conveying means (22), with which they are connected by way of engagement means (21).

3. Method according to claim 1 or 2, **characterised in that** - after the collected particles have been removed in each instance from the uppermost plate (7) after exit thereof from the liquid bath - in the case of at least two plate stacks (2, 3) arranged one after the other as seen in flow direction the plate (7) of the first plate stack (2) is subsequently displaced in longitudinal direction in free-standing engagement means of the conveying means of the adjacent second plate stack (3), wherein the respective lowermost plate (13) of the second plate stack is displaced oppositely.

4. Device for cleaning and preparing liquids interspersed with impurities of metallic and other materials and used for cooling and/or lubrication, in particular for separation of scale from the operating water of cooling circuits in the metallurgical industry, with plates (4) which are horizontally arranged in the container (1) and through the intermediate spaces of which the liquid to be cleaned flows, wherein solid particles are deposited on the plates (4) by magnetic attractive force, for performance of the method according to claims 1 to 3, **characterised in that** the plates (4) move upwardly and/or downwardly transversely to the flow direction and that in each instance the plate upper side (4a) is partly or completely magnetic for the deposition of solid particles from the liquid bath on the plates (4) by sedimentation and by the magnetic attractive force and that it comprises a suction device (8) or a mechanical stripper for removing the collected solid particles in each instance from the uppermost plate (7) after exit thereof from the liquid bath.

5. Device according to claim 4, **characterised in that** the plate underside (4b) is non-magnetic.

6. Device according to claim 4 or 5, **characterised in that** the plate upper side (4a) is permanently magnetic.

7. Device according to claim 4, 5 or 6, **characterised in that** the plate upper side (4a) is provided with a magnetic film (27).

8. Device according to claim 4, 5 or 6, **characterised in that** the plate upper side (4a) consists of individual magnet bodies (31) with a cover plate (32) of non-magnetic material arranged over these.

9. Device according to one of claims 6 to 8, characterised that at least two plate stacks (2, 3) are arranged in the container (1) one behind the other as seen in flow direction.

10. Device according to one of claims 6 to 9, **characterised in that** a settling tank (35) for the feed of used and non-cleaned operating water as well as devices for removal of coarse scale for transfer of the preclarified operating water are connected upstream of the parallel plate magnetic separator (2, 3) and a device (37) for conducting away and returning the reclarified operating water is connected downstream.

## Revendications

1. Procédé pour purifier et traiter des liquides mélangés avec des impuretés métalliques et d'autres impuretés matérielles, utilisés pour le refroidissement et/ou la lubrification, en particulier pour le dépôt de calamine contenue dans de l'eau industrielle provenant de circuits réfrigérants dans l'industrie métallurgique, le liquide à purifier s'écoulant à travers les espaces intermédiaires de plaques (4) disposées horizontalement dans un récipient (1), des particules solides étant déposées par une force d'attraction magnétique sur les plaques (4), **caractérisé en ce que** les plaques (4) se déplacent transversalement par rapport à la direction d'écoulement vers le haut et/ou vers le bas et que les particules solides se déposent en se séparant de l'eau industrielle par sédimentation et par la force d'attraction magnétique, partant des faces supérieures (4a) des plaques, sur les plaques (4) et que les particules solides rassemblées sont à chaque fois éliminées de la plaque (7) supérieure après sa sortie du bain de liquide et la plaque nettoyée pénètre ensuite à nouveau dans le bain de liquide et est déplacée vers le bas.

2. Procédé selon la revendication 1, **caractérisé en ce que** les différentes plaques (4) sont déplacées ensemble au moyen d'un dispositif de transport (22) sans fin, auquel elles sont raccordées via des moyens de prise (21).

3. Procédé selon la revendication 1 ou 2, **caractérisé en ce qu'**après que les particules rassemblées ont été éliminées de la plaque (7) supérieure après sa sortie du bain de liquide, dans le cas d'au moins deux tas (2, 3) de plaques disposées l'une derrière l'autre dans le sens d'écoulement, on déplace ensuite la plaque (7) nettoyée du premier tas (2) de plaques, dans le sens longitudinal, dans des moyens de prise libres du moyen de transport du deuxième tas (3) de plaques adjacent, la plaque (13) inférieure du deuxième tas de plaques étant à chaque fois déplacée de manière opposée.

4. Dispositif pour purifier et traiter des liquides mélangés avec des impuretés métalliques et d'autres impuretés matérielles, utilisés pour le refroidissement et/ou la lubrification, en particulier pour le dépôt de calamine contenue dans de l'eau industrielle provenant de circuits réfrigérants dans l'industrie métallurgique, avec des plaques (4) qui sont disposées horizontalement dans un récipient (1), le liquide à purifier s'écoulant entre leurs espaces intermédiaires, des particules solides étant déposées par force d'attraction magnétique sur les plaques (4), pour réaliser le procédé selon les revendications 1 à 3, **caractérisé en ce que** les plaques (4) se déplacent transversalement par rapport à la direction d'écoulement vers le haut et/ou le bas et que la face supérieure (4a) de la plaque est à chaque fois partiellement ou complètement magnétique pour le dépôt des particules solides du bain de liquide sur les plaques (4) par sédimentation et la force d'attraction magnétique et **en ce qu'**il présente un dispositif d'aspiration (8) ou un racloir mécanique pour enlever les particules solides rassemblées à chaque fois de la plaque supérieure (7) après sa sortie du bain de liquide.

5. Dispositif selon la revendication 4, **caractérisé en ce que** la face inférieure (4b) de la plaque n'est pas magnétique.

6. Dispositif selon la revendication 4 ou 5, **caractérisé en ce que** la face supérieure (4a) de la plaque est un aimant permanent.

7. Dispositif selon les revendications 4, 5 ou 6, **caractérisé en ce que** la face supérieure (4a) de la plaque est pourvue d'un film magnétique (27).

8. Dispositif selon les revendications 4, 5 ou 6, **caractérisé en ce que** la face supérieure (4a) de la plaque est constituée de différents corps magnétiques (31) avec une plaque de recouvrement (32) en matériau non magnétique disposée au-dessus de ceux-ci.

9. Dispositif selon l'une quelconque des revendications 6 à 8, **caractérisé en ce qu'**on a disposé dans le récipient (1) au moins deux tas (2, 3) de plaques disposés l'un derrière l'autre dans le sens de l'écoulement.

10. Dispositif selon l'une quelconque des revendications 6 à 9, **caractérisé en ce qu'**un bassin de sédimentation (35) est disposé en amont du séparateur magnétique (2, 3) à plaques parallèles pour l'alimentation d'eau industrielle utilisée et contaminée ainsi que des dispositifs pour le prélèvement de grosse calamine pour le passage de l'eau industrielle préclarifiée et un dispositif (37) pour évacuer et recycler l'eau industrielle post-clarifiée est disposé en aval.
